# EUROPÄISCHE PATENTSCHRIFT

(11) **EP 1 097 332 B1**
(45) Veröffentlichungstag und Bekanntmachung des Hinweises auf die Patenterteilung: **02.11.2005**
(21) Anmeldenummer: 99932764.6
(22) Anmeldetag: 01.07.1999
(51) Int. Cl.: F16L 55/10

(54) **FLIESSKANALWAND**
FLOW CHANNEL WALL
PAROI DE CANAL D'ECOULEMENT

(30) Priorität: 14.07.1998 DE 19831540
(43) Veröffentlichungstag der Anmeldung: 09.05.2001
(73) Patentinhaber: GROSS, Heinz, Dr.-Ing., D-64380 Rossdorf (DE)
(72) Erfinder: GROSS, Heinz, Dr.-Ing., D-64380 Rossdorf (DE)
(74) Vertreter: Katscher, Helmut
(86) Internationale Anmeldenummer: PCT/EP1999/004528
(87) Internationale Veröffentlichungsnummer: WO 2000/004317

(56) Entgegenhaltungen:
- DE-C- 4 400 069
- FR-A- 2 758 382
- US-A- 4 199 981
- US-A- 5 385 269

## Beschreibung

Die Erfindung betrifft eine Fließkanalwand zur partiellen Veränderung des Fließkanalquerschnitts.

Lokal begrenzt verstellbare runde bzw. ringförmige Fließkanäle sind aus DE-A-11 61 412, aus DE-A-17 04 850, aus DE-A-26 54 001, aus DE-A-28 23 99 und aus DE-A-40 13 610 bekannt. Schlitzförmige Fließkanäle, die lokal verstellbar sind, sind in DE-A-44 00 069 sowie in DE-A-195 35 930 beschrieben. Bei den runden Vorrichtungen ist nach diesem Stand der Technik der deformierbare Bereich des Fließkanals einwandig ausgeführt. Die Verwendung dieser bekannten Vorrichtungen beschränkt sich auf Grund ihrer speziellen Konstruktion, bei der relativ steife einwandige Ringelemente eingesetzt werden, die über Schrauben deformiert werden müssen, auf Durchmesser im Bereich größer 100 mm. Kleinere Fließkanalquerschnitte lassen sich mit diesen Lösungen nicht verändern.

Will man zusätzlich, was in der Praxis oft erwünscht ist, lokal begrenzt große Veränderungen des Fließkanalquerschnitts erreichen, so sind diese Konstruktionen ebenfalls ungeeignet, denn die erreichbare absolute Deformation der Ringelemente ist selbst bei der flexibelsten Lösung nach DE-A-40 13 610 mit ca. 200 µm sehr klein. Das liegt daran, daß man die Ringelemente nur innerhalb ihres linearelastischen Deformationsbereichs verformen darf, um sicher zu gehen, daß sie nach dem Zurückstellen der Stellelemente auch wieder die exakte Ausgangsform annehmen.

Das in DE-A-11 61 412 beschriebene Ringelement hat bei eingeschränkter Flexibilität aber den Vorteil, daß bei der beschriebenen Lösung keine Dichtprobleme auftreten. Die in DE-A-26 54 001 sowie in DE-A-28 23 99 beschriebenen Lösungen sind etwas flexibler, nehmen dafür aber eine gewisse Undichtigkeit in Kauf, da beim Verstellen der Ring im Bereich der Dichtfläche verschoben werden muß. Zusätzlich erzeugen die Ringe, wenn sie deformiert werden, geringfügige Totzonen im Fließkanal, was speziell bei Werkzeugen für die Kunststoffverarbeitung zu unerwünschten Materialstagnationen und Materialabbau im Massestrom führen kann.

Auch in DE-A-44 00 069 ist der deformierbare Bereich des schlitzförmigen Fließkanals nur einwandig. In DE-A-195 35 930 wird dagegen eine Vorrichtung beschrieben, bei der der linearelastische Verstellbereich durch die Integration eines Blechpakets in einen Fließkanal vergrößert wird. Schwächen besitzt diese bekannte Lösung aber in bezug auf die Fertigung und die mechanische Festigkeit. Fertigungstechnisch ist es häufig sehr schwierig oder gar unmöglich, an der gewünschten Stelle ein Blechpaket einzuschweißen. Auch das Einschweißen von sehr dünnen Blechen, die besonders flexibel wären, bereitet meist Probleme. Wenn eine Schweißung prinzipiell möglich ist, so entstehen beim Schweißen unvermeidliche Schweißspannungen, die oft zum Verzug führen. Selbst im Fall einer verzugsfreien Schweißung, wird das Deformationsvermögen des Blechpakets durch die Schweißspannungen reduziert, zusätzlich stellt die Schweißnaht immer eine mechanische Schwachstelle dar. Ferner ist nach dieser Lösung die Festigkeit der Fließkanalwand gegenüber dem Innendruck, unter dem das durch den Kanal strömende Medium steht, eingeschränkt, da nur das sogenannte Fließkanalblech über seinen gesamten Umfang mit dem Fließkanalkörper verschweißt ist. Die übrigen Bleche des Blechpakets tragen bei der bekannten Lösung nur bedingt zur Druckfestigkeit der Fließkanalwand bei, da sie nur an einer ihrer vier Seiten mit dem Fließkanalkörper verschweißt sind. Es handelt sich also statisch gesehen um einseitig eingespannte Platten.

Nun werden in den verschiedensten Industrieanwendungen Verfahren eingesetzt, bei denen es wünschenswert wäre, bei laufender Anlage bzw. bei laufendem Prozeß bestimmte Bereiche eines Fließkanals in ihrer Geometrie in möglichst starkem Maß rein elastisch ändern zu können, ohne die beschriebenen Nachteile der bekannten Lösungen in Kauf nehmen zu müssen. Der Erfindung liegt daher die Aufgabe zu Grunde, eine Vorrichtung der gattungsgemäßen Art so zu gestalten, daß insgesamt ein gegenüber dem Stand der Technik vergrößerter Absolutstellbereich und eine größere Relativverstellung in bezug auf nah benachbarte Bereiche der Fließkanalggometrie, bei einer möglichst zusätzlich vergrößerten Innendruckfestigkeit möglich wird, wobei gleichzeitig sichergestellt sein soll, daß dadurch keine Undichtigkeiten und keine Totzonen im Fließkanal auftreten und daß auch Fließkanäle mit sehr komplexen Geometrien hergestellt werden können.

Mit der Erfindung kann eine Vorrichtung realisiert werden, mit der zum Beispiel eine Masse so durch einen Fließkanal gefördert werden kann, daß beim Durchströmen des Fließkanals die Fließgeschwindigkeit der Masse in starkem Maße entweder manuell oder aber mittels einer Steuerung oder einer Regelung lokal begrenzt, durch rein linearelastische Deformation eines Teils der Fließkanalwand, verändert werden kann. Voraussetzung dafür ist aber, daß der lokale Massestrom an bestimmten Stellen in einer gewünschten Weise relativ zu benachbarten Fließkanalbereichen eingestellt werden kann.

Diese Aufgabe wird erfindungsgemäß dadurch gelöst, daß die Fließkanalwand aus einem homogenen Material besteht und zumindest in Teilbereichen mehrwandig ist.

Hierbei wird in einen Fließkanal einen Wandbereich integriert, der aus einem homogenen Material besteht und der in Teilbereichen mehrwandig ist. Unter homogenem Material sei im Rahmen dieser Anmeldung verstanden, daß der einwandige Bereich der Fließkanalwand und die Einzelwände des mehrwandigen Bereichs aus exakt dem gleichen Material bestehen, wobei auch im Bereich des Übergangs vom mehrwandigen in den einwandigen Bereich keine Inhomogenitäten, wie sie zum Beispiel Kleb- oder Schweißnähte darstellen, vorhanden sind. Homogen im Sinne dieser Anmeldung ist auch eine Wand, wenn sie aus einem Mehrkomponentenmaterial, wie zum Beispiel CFK, besteht, solange der Aufbau der Fließkanalwand im einwandigen Bereich in der Übergangszone und im mehrwandigen Bereich identisch ist. Homogen im Sinne dieser Anmeldung ist das Material auch, wenn ein Teilbereich der einwandigen Fließkanalwand in einem Arbeitsgang mit dem Übergangsbereich und einer Einzelwand des mehrwandigen Bereichs hergestellt worden ist.

Mehrwandig im Sinne dieser Anmeldung ist eine Fließkanalwand, wenn ein Schnitt senkrecht zur Fließrichtung mindestens zwei einzelne Wände durchschneidet. Diese Mehrwandigkeit hat den Vorteil, daß man durch die Variation der Dicke der Einzelwände und deren Anzahl auf einfache Weise die Flexibilität der Fließkanalwand verändern und eine unterschiedliche Festigkeit der Fließkanalwand gegenüber dem Innendruck des strömenden Mediums erreichen kann. Strebt man eine extrem hohe Flexibilität an, so muß man extrem geringe Wanddicken wählen. Soll die Fließkanalwand zusätzlich einem hohen Innendruck standhalten, so ist es vorteilhaft, im mehrwandigen Bereich sehr viele Einzelwände zu wählen und damit die Gesamtdicke D im mehrwandigen Bereich zu erhöhen. Der linearelastische Deformationsbereich und damit die Flexibilität der Fließkanalwand reduziert sich dabei in bedeutend geringerem Maß, als wenn man den Bereich mit der gleichen Gesamtdicke D einwandig ausführen würde, da die bei der gleichen Deformation auftretende maximale Dehnung in der Fließkanalwand im mehrwandigen Fall geringer ist. Zusätzlich hat die erfindungsgemäße Lösung noch den Vorteil, daß alle Einzelwände allseitig mit dem angrenzenden Fließkanalkörper fest verbunden sind, und damit in gleicher Weise Druckkräfte aufnehmen können, wie es das eigentliche Fließkanalblech tut. Im Gegensatz zum Stand der Technik handelt es sich bei den Einzelwänden um allseitig fest eingespannte Wände.

Eingesetzt werden können solche Fließkanalwände in Fließkanälen für gasförmige als auch für flüssige Medien. Man kann einen breiten Luftstrom, zum Beispiel in einem Luftrakel, mit dem man eine Bahn über eine größere Breite andrückt, oder ein Fluid über eine größere Breite verteilt, in seiner Intensität über der Breite sehr genau einregulieren. Im Bereich der Drucktechnik läßt sich beispielsweise die Verteilung des Stromes einer Druckfarbe, die durch einen schlitzförmigen Strömungskanal strömt, mittels der erfindungsgemäßen Vorrichtung in idealer Weise einstellen. Schließlich gibt es in der Kunststoffverarbeitung vielfältige Einsatzmöglichkeiten zur Regulierung einer in einem Werkzeug vorliegenden Schmelzestromverteilung. Solche Fließkanalwände können in alle denkbaren Fließkanalgeometrien integriert werden. Am verbreitetsten sind jedoch schlitzförmige, runde und ringförmige Fließkanalgeometrien.

Die Fließkanalwand besteht aus einem homogenen Material und ist zum Zweck der partiellen Deformation zumindest in einem Teilbereich mehrwandig ausgeführt. Solche Fließkanalwände können vorteilhaft in Werkzeuge integriert werden, bei denen die Anforderung besteht, daß die Geometrie des im Werkzeug vorhandenen Fließkanals an einzelnen Orten gezielt verändert werden kann.

Weitere Details ergeben sich aus den nachfolgenden Beschreibungen einzelner Ausführungsformen der Vorrichtung sowie einzelner Verfahrensanordnungen anhand der Zeichnungen. Es zeigt:
- Fig. 1: eine homogene Fließkanalwand, die in einem Teilbereich mehrwandig ist, in der Aufsicht,
- Fig. 2: die Schnittdarstellung II-II entsprechend Fig. 1,
- Fig. 3: die Schnittdarstellung III-III entsprechend Fig. 1,
- Fig. 4: eine Schnittdarstellung durch einen Fließkanalabschnitt, in dem der mehrwandige Bereich gekrümmt ausgeführt ist,
- Fig. 5: eine Schnittdarstellung einer Vorrichtung, bei der sich der mehrwandige flexible Bereich am Ende des Fließkanals befindet,
- Fig. 6: eine Schnittdarstellung einer Fließkanalwand, bei der sich auf Einzelwänden Schichten aus einem anderen Werkstoff befinden,
- Fig. 7: eine Schnittdarstellung eines Fließkanalabschnitts in dem sich zwei Strömungskanäle vereinigen,
- Fig. 8: eine Schnittdarstellung eines Fließkanalabschnitts, in dem zwei flexible mehrwandige Fließkanalwände integriert sind, und
- Fig. 9: eine Schnittdarstellung eines Werkzeugs, dessen Fließkanalwände in Fließrichtung bereichsweise parallel verstellbar sind.

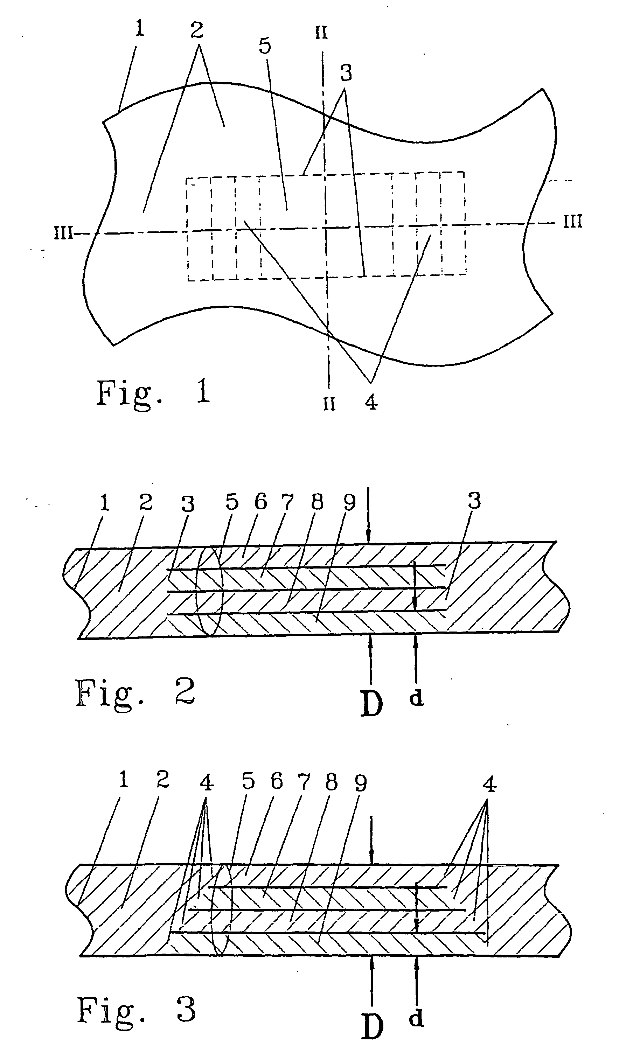

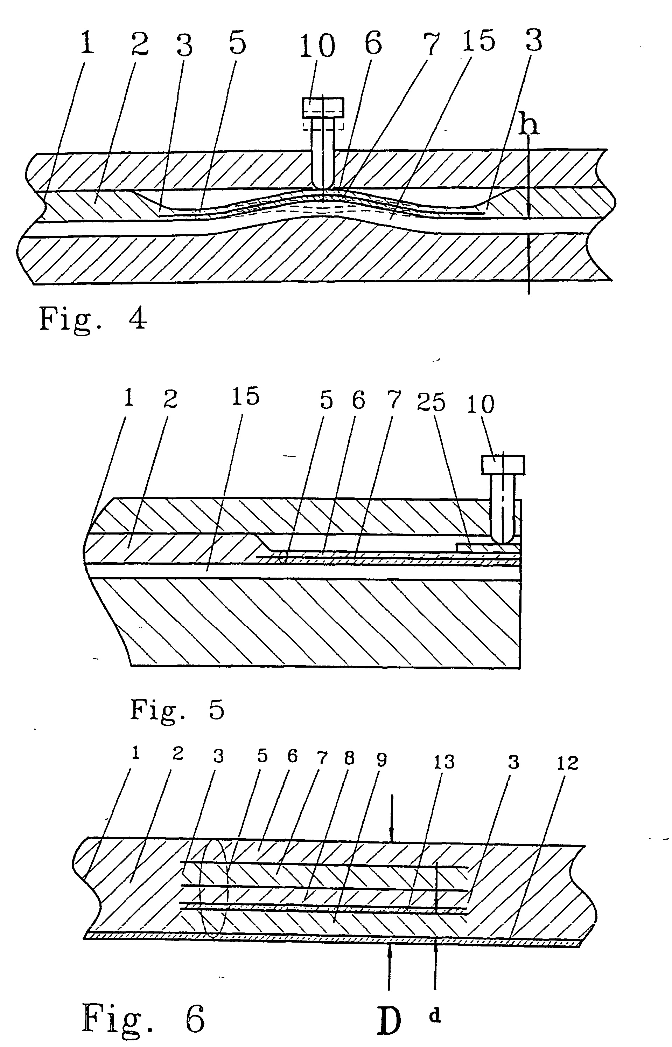

In der Aufsicht auf eine erfindungsgemäße Fließkanalwand 1 erkennt man, wie in Fig. 1 gezeigt, ungestörte homogene Übergangsbereiche 3 und 4 zwischen dem einwandigen Bereich 2 und dem mehrwandigen Bereich 5 der Fließkanalwand 1. Ungestört heißt in diesem Fall, daß weder irgendwelche Materialveränderungen auf der Oberfläche der Fließkanalwand existieren, noch irgendwelche Verbindungsnähte, wie zum Beispiel Schweiß- oder Klebnähte vorhanden sind. Das heißt, in der Aufsicht erkennt man den mehrwandigen Bereich 5 der Platte nicht. Erst im Schnitt II-II (Fig. 2) und III-III (Fig. 3) ist der mehrwandige Bereich 5 der Fließkanalwand 1 mit den Einzelwänden 6 - 9 zu erkennen. Die Wanddicke d der Einzelwände 6 - 9 sollte aus Gründen einer hohen Elastizität des mehrwandigen Bereichs 5 Einzelwanddicken von kleiner 2 mm besitzen, vorzugsweise sogar solche von kleiner 1 mm, um bei der Deformation die maximale Dehnung an den Oberflächen der Einzelwände 6 - 9 klein zu halten. In speziellen Fällen kann es auch vorteilhaft sein, Einzelwanddicken d im Mikrometerbereich zu verwenden. In manchen Fällen kann es auch vorteilhaft sein, wenn die Fließkanalwand 1 auf einer Seite zumindest bereichsweise von einer weiteren Wand 25, wie in Fig. 5 gezeigt, abgestützt wird. Es können natürlich auch mehrere Stützwände 25 eingesetzt werden.

Für eine eventuell geforderte Festigkeit kann es vorteilhaft sein, daß die Fließkanalwand 1 aus einem Werkstoff mit einer Festigkeit von größer 800 MPa besteht, vorzugsweise sogar eine Festigkeit von größer 1200 MPa. In speziellen Fällen kann es auch vorteilhaft sein, daß sich im mehrwandigen Bereich die Einzelwanddicke d zur Erhöhung der Flexibilität über eine gewisse Strecke verringert. Bei schlitzförmigen Fließkanälen kann man den linearelastischen Deformationsbereich des mehrwandigen Bereichs 5 vergrößern, wenn der mehrwandige Bereich 5 ein- oder mehrdimensional gekrümmt ist. Fig.4 zeigt einen in Fließrichtung gekrümmten Fließkanalbereich. Drückt man an einer Stelle des mehrwandigen Bereichs 5 (gestrichelt gezeichnet) mit einer Stellschraube 10 auf diesen Bereich 5, so ändern sich lediglich die Biegeradien der Krümmung. Wäre, wie zum Beispiel in Fig. 1-3 keine Krümmung vorhanden, so müßte sich bei der kleinsten Auslenkung des mehrwandigen Bereichs 5 seine Länge ändern, was zu zusätzlichen unerwünschten Zugspannungen in dem mehrwandigen Bereich führen würde. Diesen Zugspannungen würden sich die unvermeidbaren Biegespannungen überlagern, was zu einer Reduzierung der erreichbaren linearelastischen Deformation führen würde, womit der Fließkanal 15 nur in geringem Maß im Bereich der Stellschrauben 10 in seiner Höhe h reduziert werden könnte. In vielen Fällen ist es vorteilhaft, wenn der mehrwandige Bereich 5 das Ende eines Fließkanals 1 bildet, wie in Fig. 5 gezeigt.

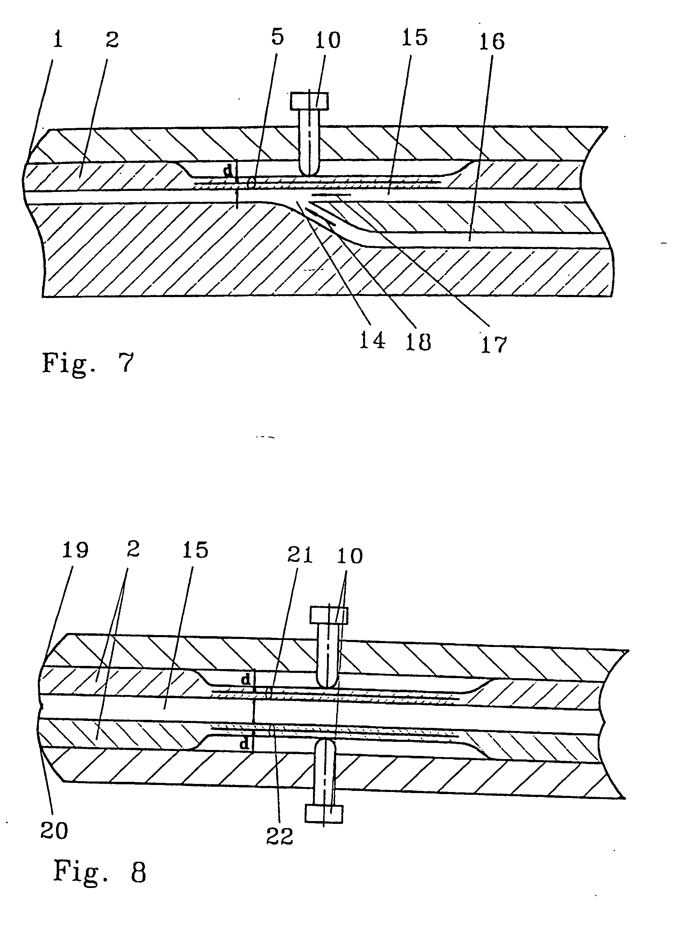

Häufig kann es vorteilhaft sein, wenn sich, wie in Fig. 6 dargestellt, im mehrwandigen Bereich 5 auf mindestens einer Einzelwand 9 eine weitere Schicht 12 aus einem anderen Werkstoffe befindet oder wenn sich im mehrwandigen Bereich 5 zwischen mindestens zwei Einzelwänden 8 und 9 eine Zwischenschicht 13 aus einem anderen Werkstoff befindet. Dies kann zum Beispiel eine Gleit- oder Korrosionsschutzschicht 12 auf der Fließkanaloberfläche sein, oder zum Beispiel auch eine Gleit- bzw. Trennschicht 13 zwischen den Einzelwänden 8 und 9. Besonders interessant ist es, wie in Fig. 7 dargestellt, wenn der mehrwandige Bereich 5 der Fließkanalwand 1 im Vereinigungsbereich 14 von zwei oder mehreren Strömungskanälen 15 und 16 angeordnet ist. Dabei kann der auf dem Hauptmassestrom 17 aufströmende zweite Massestrom 18 über seiner Breite oder seinem Umfang lokal begrenzt zum Beispiel mittels einfacher Stellschrauben 10, die über der Breite, oder über den Umfang angeordnet sind, verändert werden. Als Stellmittel können statt der Stellschrauben 10 auch andere Systeme eingesetzt werden, wie zum Beispiel hydraulische oder pneumatische Stellsysteme oder aber auch beispielsweise Wärmedehnbolzen, Piezotranslatoren und Stellantriebe.

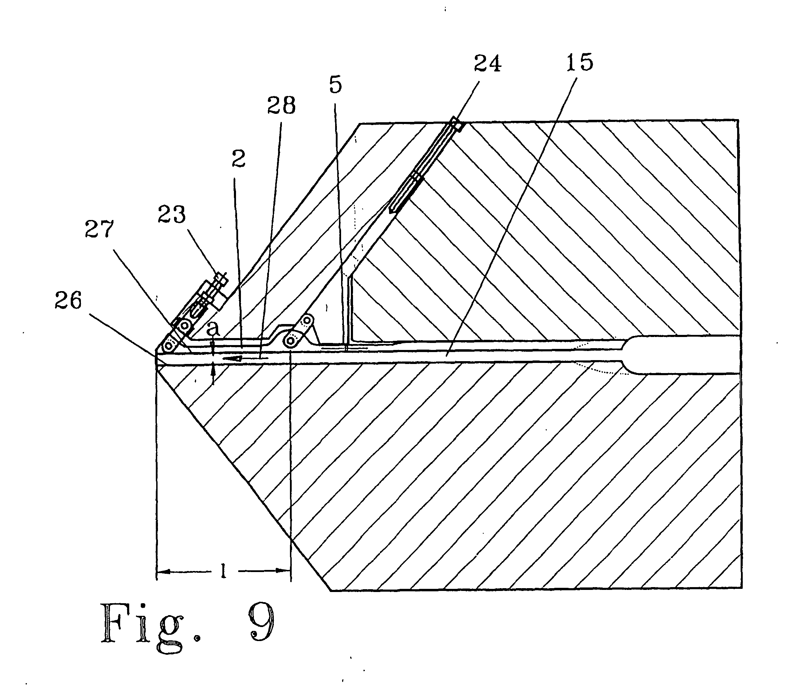

Eine noch größere Verstellwirkung erreicht man natürlich, wenn, wie in Fig. 8 gezeigt, mindestens in einem Bereich eines Fließkanals 15 mehrere Fließkanalwände 19 und 20 jeweils aus einer bereichsweise mehrwandigen Fließkanalwand 19 und 20 bestehen und wenn die mehrwandigen Bereiche 21 und 22 mittels äußerer Stellelemente 10 zumindest bereichsweise lokal deformierbar sind. Ordnet man zum Beispiel die mehrwandigen Bereiche 21 und 22 so an, daß sie sich wie in Fig. 8 gegenüberliegen, so erreicht man, indem man beide mehrwandigen Bereiche 21 und 22 mittels der Stellschrauben 10 aufeinander zustellt, die doppelte Drosselwirkung. Mit der in Fig. 9 gezeigten Vorrichtung ist der Abstand a zweier einen Fließkanal 15 bildender Fließkanalwände 26 und 27, in Fließrichtung 28 zumindest bereichsweise mittels geeigneter Stellsysteme 23 und 24 über eine gewisse Länge 1 um mehr als 0,2 mm parallel verstellbar. Die Länge 1 sollte vorzugsweise größer 5 mm sein. Dies kann man beispielsweise erreichen, indem man die Fließkanalwand 2 mit Hilfe von zwei unabhängigen Stellsystemen 23 und 24 verstellt. Dies ist immer dann vorteilhaft, wenn in der Anwendung eine Beruhigung der Strömung nach der Fließkanaländerung gewünscht wird.

Bei allen Vorrichtungen ist es vorteilhaft, wenn die Einzelwände 6-9 eng übereinander liegen, so daß sie sich mechanisch gegeneinander abstützen. Bei einer lokalen Verstellung des mehrwandigen Bereichs 5 ergibt sich immer eine stetige Änderung der Fließkanalgeometrie, so daß Totwassergebiete, in denen die Strömungsgeschwindigkeit gegen Null geht, vermieden werden. Auch können wegen der homogenen Fließkanalwand, die keine Trennebenen besitzt, keine Undichtigkeiten im Verstellbereich auftreten.

Solche mehrwandigen Fließkanalwände 1 wie in Fig. 1-9 gezeigt, können erfindungsgemäß hergestellt werden, indem die Fließkanalwand stufenweise mittels eines chemischen oder physikalischen Abscheideverfahrens, oder mittels Spritz-, Streich- und Laminierverfahren, oder mittels eines Sinterverfahrens oder ähnlicher lagenweise ausführbarer Verfahren hergestellt ist, wobei im mehrwandigen Bereich 5 die Oberfläche jeder Einzelwand 6-9 so behandelt wird , daß bei der nächsten Herstellstufe die neu aufgetragene Schicht keine Verbindung mit der Oberfläche der davor hergestellten Einzelwand 6-9 eingeht. Diese Herstellverfahren kann man natürlich zu beliebigen Zeiten unterbrechen. Beispielhaft soll hier das galvanische Abscheiden einer solchen mehrwandigen Fließkanalwand 1 beschrieben werden. Dabei wird auf ein Modell, das exakt die Geometrie der gewünschten Fließkanaloberfläche besitzt, beispielsweise eine erste Nickelschicht in der Dicke der gewünschten Einzelwand 6 abgeschieden. Dann wird der Abscheideprozeß unterbrochen und die freie Oberfläche der abgeschiedenen Schicht, in dem Bereich 5, in dem die Fließkanalwand mehrwandig ausgeführt werden soll, inaktiviert. Inaktivieren heißt in diesem Fall, daß die Oberfläche so behandelt wird, daß bei der Fortsetzung des Abscheideprozesses in dem behandelten Bereich 5 keine Verbindung zwischen der neu abgeschiedenen Schicht 7 und der bereits vorhandenen ersten Schicht 6 möglich ist. Dies kann man beispielsweise mittels des Auftrags von Trennlacken oder aber durch Aufkleben von Trennfolien erreichen. Außerhalb des inaktivierten Bereichs wird sich die zweite Schicht mit der bereits abgeschiedenen ersten Schicht innig verbinden, so daß die Fließkanalwand 1 in diesem Bereich einwandig wird. Nur im inaktivierten Bereich wird eine zweite Fließkanalwand 7 entstehen, die in Ihren Randbereichen 3 und 4 homogen in den einwandigen Bereich 2 übergeht. Diesen Prozeß kann man prinzipiell beliebig oft wiederholen, so daß man auf diese Weise beliebig viele Einzelwände 6-9 herstellen kann, die jeweils homogen in den einwandigen Fließkanalwandbereich 2 übergehen. Für viele Anwendungen solcher mehrwandigen Fließkanalwände 1 ist es vorteilhaft, wenn die Inaktivierungsschicht auch gleich als Gleitschicht zwischen den Einzelwänden fungiert, um bei der Deformation die Reibung zwischen den Oberflächen der Einzelwände 6-9 herabzusetzen. Es muß aber nicht zwangsweise eine Zwischenschicht 13 zum Inaktivieren eingesetzt werden. Die Oberflächen der Einzelwände können.auch durch Veränderung der Oberflächenladung oder der Oberflächenspannung inaktiviert werden. In diesen Fällen entsteht zwischen den Einzelwänden 6-9 keine Zwischenschicht aus einem andern Material. Die erfindungsgemäßen Herstellverfahren stellen auch sicher, daß die Einzelwände 6-9 sich gegeneinander abstützen, da sie verfahrensbedingt bei den Fertigungsverfahren auch bei komplexen mehrdimensionalen Wandgeometrien automatisch sehr dicht übereinander angeordnet sind.

## Patentansprüche

1. Fließkanalwand (1) zur partiellen Veränderung des Fließkanalquerschnitts, **dadurch gekennzeichnet, daß** die Fließkanalwand (1) aus einem homogenen Material besteht und zumindest in Teilbereichen mehrwandig ist.

2. Fließkanalwand (1) nach Anspruch 1, **dadurch gekennzeichnet, daß** die Fließkanalwand (1) zumindest im mehrwandigen Bereich (5) Einzelwanddicken (d) von kleiner gleich 2 mm besitzt.

3. Fließkanalwand (1) nach Anspruch 1, **dadurch gekennzeichnet, daß** die Fließkanalwand (1) auf einer Seite zumindest bereichsweise von weiteren Wänden (25) abgestützt wird.

4. Fließkanalwand (1) nach Anspruch 1, **dadurch gekennzeichnet, daß** die Fließkanalwand (1) aus einem Werkstoff mit einer Festigkeit von größer 800 MPa besteht.

5. Fließkanalwand (1) nach Anspruch 1, **dadurch gekennzeichnet, daß** sich im mehrwandigen Bereich (5) die Einzelwanddicke (d) zur Erhöhung der Flexibilität über eine gewisse Strecke verringert.

6. Fließkanalwand (1) nach Anspruch 1, **dadurch gekennzeichnet, daß** der mehrwandige Bereich (5) ein- oder mehrdimensional gekrümmt ist.

7. Fließkanalwand (1) nach Anspruch 1, **dadurch gekennzeichnet, daß** der mehrwandige Bereich (5) das Ende eines Fließkanals (15) bildet.

8. Fließkanalwand (1) nach Anspruch 1, **dadurch gekennzeichnet, daß** sich im mehrwandigen Bereich (5) auf mindestens einer Einzelwand (9) eine weitere Schicht (12) aus einem anderen Werkstoff befindet.

9. Fließkanalwand (1) nach Anspruch 1, **dadurch gekennzeichnet, daß** sich im mehrwandigen Bereich (5) zwischen mindestens zwei Einzelwänden (8 und 9) eine Zwischenschicht (13) aus einem anderen Werkstoff befindet.

10. Fließkanalwand (1) nach Anspruch 1, **dadurch gekennzeichnet, daß** der mehrwandige Bereich (5) der Fließkanalwand (1) im Vereinigungsbereich (14) von zwei oder mehreren Strömungskanälen (17 und 18) angeordnet ist.

11. Fließkanalwand (1) nach Anspruch 1, **dadurch gekennzeichnet, daß** mindestens in einem Bereich eines Fließkanals mehrere Fließkanalwände (19 und 20) jeweils aus einer Hülse bzw. Platte (21 und 22) bestehen, und daß beide Hülsen bzw. Platten mittels äußerer Stellelemente (10) zumindest bereichsweise lokal deformierbar sind.

12. Fließkanalwand (1) nach Anspruch 1, **dadurch gekennzeichnet, daß** der Abstand a zweier einen Fließkanal (15) bildender Fließkanalwände (26 und 27) in Fließrichtung (28) zumindest bereichsweise mittels geeigneter Stellsysteme (23 und 24) über eine gewisse Länge 1 um mehr als 0,2 mm parallel veränderbar ist.

13. Verfahren zur Herstellung einer bereichsweise mehrwandigen Fließkanalwand (1) nach einem der Ansprüche 1-12, **dadurch gekennzeichnet, daß** die Fließkanalwand (1) stufenweise mittels eines chemischen oder physikalischen Abscheideverfahrens, oder mittels Spritz-, Streich- und Laminierverfahren, oder mittels eines Sinterverfahrens oder ähnlicher lagenweise ausführbarer Verfahren hergestellt ist, wobei im mehrwandigen Bereich (5) die Oberfläche jeder Einzelwand (6,7,8,9) so behandelt wird , daß bei der nächsten Herstellstufe die neu aufgetragene Schicht keine Verbindung mit der Oberfläche der davor hergestellten Einzelwand (6,7,8) eingeht.

## Claims

1. Flow channel wall (1) for partially altering the cross-section of the flow channel, **characterised in that** the flow channel wall (1) comprises a homogeneous material and is, at least in some areas, multi-walled.

2. Flow channel wall (1) according to claim 1, **characterised in that**, at least in the multi-walled section (5), the flow channel wall (1) has individual wall thicknesses (d) equal to or less than 2 mm.

3. Flow channel wall (1) according to claim 1, **characterised in that** at least on one side, sections of the flow channel wall (1) are supported by additional walls (25).

4. Flow channel wall (1) according to claim 1, **characterised in that** the flow channel wall (1) is made from a material with a strength of more than 800 MPa.

5. Flow channel wall (1) according to claim 1, **characterised in that** in the multi-walled section (5), the individual wall thickness (d) is reduced over a certain distance, in order to increase the flexibility.

6. Flow channel wall (1) according to claim 1, **characterised in that** the multi-walled section (5) is bent in one or more dimensions.

7. Flow channel wall (1) according to claim 1, **characterised in that** the multi-walled section (5) forms the end of a flow channel (15).

8. Flow channel wall (1) according to claim 1, **characterised in that** on at least one single wall (9) in the multi-walled section (5) there is an additional layer (12) made from a different material.

9. Flow channel wall (1) according to claim 1, **characterised in that** in the multi-walled section (5), there is an intermediate layer (13) made from a different material, between at least two individual walls (8 and 9).

10. Flow channel wall (1) according to claim 1, **characterised in that** the multi-walled section (5) of the flow channel wall (1) is located in the connection area (14) of two or more flow channels (17 and 18).

11. Flow channel wall (1) according to claim 1, **characterised in that** in at least one section of the flow channel, several flow channel walls (19 and 20) comprise in each case a sleeve or plate (21 and 22) and that both sleeves or plates can be deformed locally, at least in some sections, by external control elements (10).

12. Flow channel wall (1) according to claim 1, **characterised in that** the distance a between two flow channel walls (26 and 27) forming a flow channel (15) in the direction of flow (28) can be altered in parallel, at least in sections, over a certain length 1 by more than 0.2 mm, using suitable control systems (23 and 24).

13. Process for the manufacture of a flow channel wall (1) that is multi-walled in parts, according to any of the claims 1-12, **characterised in that** the flow channel wall (1) is manufactured in stages by means of a chemical or physical deposition process, or a spraying, coating and laminating process or a sintering process or similar layering process, where, in the multi-walled section 5, the surface of each single wall (6,7,8,9) is treated in such a way that during the next manufacturing stage, the newly applied coating does not form a bond with the surface of the previously produced single wall (6,7,8).

## Revendications

1. Paroi de canal d'écoulement (1) pour modifier partiellement la section transversale du canal d'écoulement, **caractérisée en ce que** la paroi (1) du canal d'écoulement est constituée d'un matériau homogène et présente plusieurs parois au moins dans des zones partielles.

2. Paroi de canal d'écoulement (1) selon la revendication 1, **caractérisée en ce que** la paroi (1) du canal d'écoulement possède des épaisseurs de paroi individuelles (d) inférieures ou égales à 2 mm au moins dans la zone à plusieurs parois (5).

3. Paroi de canal d'écoulement (1) selon la revendication 1, **caractérisée en ce que** la paroi (1) du canal d'écoulement est étayée, sur un côté, au moins par zones, par d'autres parois (25).

4. Paroi de canal d'écoulement (1) selon la revendication 1, **caractérisée en ce que** la paroi (1) du canal d'écoulement est constituée d'un matériau d'une résistance de plus de 800 MPa.

5. Paroi de canal d'écoulement (1) selon la revendication 1, **caractérisée en ce que** l'épaisseur de paroi individuelle (d) diminue sur une certaine distance dans la zone à plusieurs parois (5) pour augmenter la flexibilité.

6. Paroi de canal d'écoulement (1) selon la revendication 1, **caractérisée en ce que** la zone à plusieurs parois (5) est incurvée dans une ou plusieurs dimensions.

7. Paroi de canal d'écoulement (1) selon la revendication 1, **caractérisée en ce que** la zone à plusieurs parois (5) forme la fin d'un canal d'écoulement (15).

8. Paroi de canal d'écoulement (1) selon la revendication 1, **caractérisée en ce qu'**une autre couche (12) formée d'un autre matériau se trouve dans la zone à plusieurs parois (5) sur au moins une paroi individuelle (9).

9. Paroi de canal d'écoulement (1) selon la revendication 1, **caractérisée en ce qu'**une couche intermédiaire (13) formée d'un autre matériau se trouve dans la zone à plusieurs parois (5) entre au moins deux parois individuelles (8 et 9).

10. Paroi de canal d'écoulement (1) selon la revendication 1, **caractérisée en ce que** la zone à plusieurs parois (5) de la paroi (1) du canal d'écoulement est disposée dans la zone collectrice (14) de deux ou plusieurs canaux d'écoulement (17 et 18).

11. Paroi de canal d'écoulement (1) selon la revendication 1, **caractérisée en ce qu'**au moins dans une zone d'un canal d'écoulement, plusieurs parois (19 et 20) du canal d'écoulement sont constituées respectivement d'une douille ou d'une plaque (21 et 22), et **en ce que** les deux douilles ou plaques peuvent être déformées localement au moins par zones au moyen d'organes de réglage extérieurs (10).

12. Paroi de canal d'écoulement (1) selon la revendication 1, **caractérisée en ce que** la distance a de deux parois (26 et 27) formant un canal d'écoulement (15) peut être modifiée en parallèle au moins par zones sur une certaine longueur 1 de plus de 0,2 mm au moyen de systèmes de réglage appropriés (23 et 24).

13. Procédé de fabrication d'une paroi de canal d'écoulement (1) formée de plusieurs parois par zones selon l'une quelconque des revendications 1-12, **caractérisé en ce que** la paroi (1) du canal d'écoulement est fabriquée par étapes au moyen d'un procédé de séparation chimique ou physique, ou au moyen d'un procédé de pulvérisation, d'enduction et de laminage, ou encore au moyen de procédés analogues réalisables par couches, la surface de chaque paroi individuelle (6, 7, 8, 9) étant traitée dans la zone à plusieurs parois (5) de sorte que, lors de l'étape de fabrication suivante, la couche nouvellement appliquée ne se lie pas à la surface de la paroi individuelle (6, 7, 8) fabriquée précédemment.
